(19)

Europäisches
Patentamt
European
Patent Office
Office européen
des brevets

(11) **EP 1 990 768 A1**

(12) **EUROPEAN PATENT APPLICATION**

(43) Date of publication:
**12.11.2008  Bulletin 2008/46**

(51) Int Cl.:
*G06T 7/00* (2006.01)

(21) Application number: **07290604.3**

(22) Date of filing: **11.05.2007**

<table>
<tr>
<td>

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **INSERM (Institut National de la Santé et de la Recherche Médicale)**
**75654 Paris Cedex 13 (FR)**

(72) Inventors:
• **Benali, Habib**
**75634 Paris Cedex 13 (FR)**

</td>
<td>

• **Lehericy, Stéphane**
**75014 Paris (FR)**
• **Kinkingnehun, Serge**
**94400 Vitry-sur-Seine (FR)**
• **Magnin, Benoît**
**75012 Paris (FR)**
• **Dubois, Bruno**
**75016 Paris (FR)**

(74) Representative: **Cabinet Plasseraud**
**52 rue de la Victoire**
**75440 Paris Cedex 09 (FR)**

</td>
</tr>
</table>

(54) **Method for analysing an image of the brain of a subject, computer program product for analysing such image and apparatus for implementing the method**

(57) Method for analysing an image of the brain of a subject, comprising:
- collection of an image in at least three dimensions of the brain of a subject,
- parcellation of said image into regions of interest (ROIs) in a brain native reference frame characteristic of said brain,

- determination in an automated manner, for each ROI, of at least one discriminating value based on image data measured on the image, said image data being representative of an anatomical or functional feature of the brain, said discriminating value being relative with regard to the discriminating values of the other ROIs.

EP 1 990 768 A1

**Description**

The invention relates to a method for analysing an image of the brain of a subject, to a computer program product for analysing such image and to an apparatus for implementing the method.

For brain study, especially in terms of composition, morphology, behaviour or evolution, the brain of a subject may be imaged for example with a three or four dimension image. The image of the brain can then be processed and analysed to identify reliable characteristics, corresponding to measured data of the image, representative of an anatomical or functional feature of the brain.

In a particular application, images of the brain of a plurality of subjects may be distinguished from one another or classified in different groups according to the image data. For example, the method may be used to distinguish images wherein data indicate that the brain suffer from Alzheimer disease from images wherein data indicate that the brain suffer from Mild Cognitive Impairment (MCI) or wherein data indicate that the brain is healthy.

A known approach of processing and analysing the image may consist in a manual or automated parcellation of the brain into regions of interest (ROIs) and in performing volumetry, i.e. measurements of the volume of selected ROIs, the image data being then the volume of the ROIs.

Furthermore, it is also known, from document US-2006/0104494 to implement a method wherein image data for a plurality of subjects are collected, a ROI is selected and intensity and spatial volume data are calculated for the ROI. Said intensity data and volume data are differences between a subject ROI image and the mean of all subject ROI images.

In the known method, the analysis of the image is focused on selected ROIs which are known to be concerned with the searched anatomic or functional feature. Measurement of image data, and subsequent distinction or classification, is thus performed on specific ROIs chosen according to the searched anatomic or functional feature of the brain.

However, the known method does not provide for an accurate and objective selection of the significant ROI.

Besides, the known method is not easily reproducible and even not reliable since said method requires collection of images of the brains in the same conditions, with the same apparatus and using the same settings to make a difference or a comparison possible.

The invention aims to solve the above mentioned deficiency.

To this end, the invention concerns a method for analysing an image of the brain of a subject, comprising:

-    collection of an image in at least three dimensions of the brain of a subject,
-    parcellation of said image into regions of interest (ROIs) in a brain native reference frame characteristic of said brain,
-    determination in an automated manner, for each ROI, of at least one discriminating value based on image data measured on the image, said image data being representative of an anatomical or functional feature of the brain, each discriminating value being relative with regard to the discriminating values of the other ROIs.

Hence, the method is performed on the whole brain and provides each ROI with an objective and accurate discriminating value. Accuracy of the method is further increased because parcellation is performed in the brain native reference frame.

Distinction or classification of the images based on said method is then more efficient and closer to the real situation of the anatomical or functional feature. The image data of each ROI may be considered and all significant ROIs in relation with a searched feature may then be considered.

Furthermore, since the discriminating value is relative, it does not depend on the settings of the apparatus for collection of the image. Thus the method is reliable and easily reproducible and may be used for analysing images collected from different apparatus or with different settings.

In an embodiment, parcellation may be performed in an automated manner.

Parcellation may then comprise:

-    normalization of the image, the image being sampled into voxels, each voxel being assigned to a ROI of a common template of parcellation into ROIs in a common reference frame,
-    application of a non linear transformation to the template of parcellation into ROIs.

In particular, the non linear transformation may comprise:

-    calculation of an inverted transformation of the normalization,
-    application of said inverted transformation to the template of parcellation into ROIs, each voxel of the image being assigned to one of the ROI in the brain native reference frame.

Besides, determination of the discriminating value may comprise, for each ROI:

- calculation of at least one relative parameter concerning the image data based on said image data measured for each voxel,
- establishment of the discriminating value from the relative parameter.

The determination of the discriminating value may comprise, for each ROI, the calculation of several relative parameters concerning the image data and the establishment of the discriminating value from a combination of said relative parameters.

In a particular embodiment, the determination of the discriminating value may comprise, for each ROI, identification of groups of voxels according to image data of said voxels, said identification of groups of voxels being performed, for example, using a probability model applied to the voxels.

The calculation of the relative parameter may then be performed for voxels of one of the groups.

The relative parameter may comprise relative weight of one group of voxels with regard to the other groups of voxels.

The relative parameter may comprise statistical parameter concerning the image data of the voxels.

For example, the image data may comprise intensity level.

The method may further comprise determination of at least one significant ROI regarding the relative discriminating values of the ROIs.

Collection of the image, parcellation of said image, determination of the relative discriminating value for each ROI may then be performed for the brain of a plurality of subjects, an evaluation of a discriminating power of the relative discriminating value being performed by a statistical analysis of the relative discriminating value.

Such method may further comprise classification of the images according to the relative discriminating values of the significant ROI.

According to another aspect, the invention concerns a computer program product for analysing an image of the brain of a subject, said computer program product being stored on a carrier readable by a computer and comprising instructions operable to cause a processor:

- to parcellate in an automated manner an image in at least three dimensions of the brain of a subject into regions of interest (ROIs) in a brain native reference frame characteristic of said brain,
- to determine in an automated manner, for each ROI, at least one discriminating value based on image data measured on the image, said image data being representative of an anatomical or functional feature of the brain, each discriminating value being relative with regard to the discriminating values of the other ROIs.

In an embodiment, the instructions operable to cause the processor to parcellate the image may be operable to cause the processor:

- to normalise the image, the image being sampled into voxels, each voxel being assigned to a ROI of a common template of parcellation into ROIs in a common reference frame,
- to apply a non linear transformation to the template of parcellation into ROIs.

In particular, the instructions operable to cause the processor to apply the non linear transformation may be operable to cause the processor:

- to calculate an inverted transformation of the normalization,
- to apply said inverted transformation to the template of parcellation into ROIs, each voxel of the image being assigned to one of the ROI in the brain native reference frame.

Besides, the instructions operable to cause the processor to determine the discriminating value may be operable to cause the processor, for each ROI:

- to calculate at least one relative parameter concerning the image data based on said image data measured for each voxel,
- to establish the discriminating value from the relative parameter.

The instructions operable to cause the processor to determine the discriminating value may be operable to cause the processor, for each ROI, to calculate several relative parameters concerning the image data and to establish the discriminating value from a combination of said relative parameters.

In a particular embodiment, the instructions operable to cause the processor to determine the discriminating value may be operable to cause the processor, for each ROI, to identify groups of voxels according to image data of said voxels, the instructions operable to cause the processor to identify groups of voxels being, for example, operable to cause the processor to apply a probability model to the voxels.

The instructions operable to cause the processor to calculate the relative parameter may then be operable to cause the processor to calculate the relative parameter for voxels of one of the groups.

The computer program product may further comprise instructions operable to cause the processor to determine at least one significant ROI regarding the relative discriminating values of the ROIs.

The instructions operable to cause the processor to parcellate the image and to determine the relative discriminating value for each ROI may make the processor operate said instructions for images of the brain of a plurality of subjects, the computer program product may further comprise instructions operable to cause the processor to evaluate a discriminating power of the relative discriminating value by a statistical analysis of the relative discriminating value.

The computer program product may further comprise instructions operable to cause the processor to classify the images according to the relative discriminating values of the significant ROI.

According to another aspect, the invention concerns an apparatus for implementing the above defined method, comprising:

- collection means suitable for collection of an image in at least three dimensions of the brain of a subject,
- a carrier storing a computer program product as defined above,
- a computer provided with a processor and suitable to read said carrier.

Other objects and advantages of the invention will emerge from the following disclosure.

In order to study the brain of a subject or of several subjects, for example to identify pathology or troubles of the brain, the invention proposes an improved method for analysing images of the brain.

Actually images of the brain may be classified according to image data measured on each image and representative of an anatomical or functional feature of the pathology or the trouble. It is then possible to distinguish images showing said pathology or trouble from the other. In a particular embodiment, the concerned pathology may be the Alzheimer disease and images may be used to identify those having image data representative of the Alzheimer disease, those having image data representative of Mild Cognitive Impairment (MCI) and those having image data representative of healthy brain.

The method according to the invention makes an analysis performed on the whole brain so as to identify in an objective and accurate manner localisations where image data show that said localisations should be taken into account for the study of the brain features and of the evolution of said brain features.

The method for analysing an image of the brain of a subject, comprises:

- collection of an image in at least three dimensions of the brain of the subject,
- parcellation of said image into regions of interest (ROIs),
- determination in an automated manner, for each ROI, of at least one discriminating value based on image data measured on the image, said discriminating value being relative with regard to the discriminating values of the other ROIs.

The image of the brain may be collected in any known manner. Images for use in the method may be images in three or four dimensions which make it possible to image the circulations of fluids and the diffusion.

For example, collection of the image may be performed using Magnetic Resonance Imaging (MRI), such as anatomic T1 weighted MRI or T2 weighted MRI. Images may also be collected using a diffusion and perfusion weighted imaging which provides information about blood circulation or a functional MRI wherein Magnetic Resistance signal intensity permits to image the fluctuations in capillary blood flow and blood oxygenation. Besides, PET may be used to collect images on which glucose mechanism, for example, may be imaged. Image could also be collected by diffusion tensor imaging (DTI) which permits to image motion of water and to measure the rate and the directionality of water movement.

Parcellation of the image into ROIs may be performed in an automated manner, using for example a computer provided with a suitable program.

In a first step of the parcellation, a normalization, i.e. a transformation in a common reference frame, of the image may be performed, the image being sampled into voxels, each voxel being assigned to a ROI of a common template of parcellation into ROIs.

An example of suitable template of parcellation into ROIs is that of Tzourio-Mazoyer (« Automated Anatomical Labeling of Activations in SPM Using a Macroscopic Anatomical Parcellation of the MNI MRI Single-Subject Brain », N. TZOURIO-MAZOYER et al., NeuroImage, vol.15, 273-289, January 2002) which defines a mask of, for example, a hundred and sixteen or ninety, ROIs, obtained from the Montreal Neurological Institute (MNI) single subject, in the common MNI reference frame. The mask is applied to the image, using for example a "normalise" function of the program, so that each image may be normalised in the MNI reference frame.

In order to increase accuracy of the method, parcellation is performed in the brain native reference frame characteristic of said brain. To that end, next to the normalization, the parcellation may comprise an application of a non linear transformation wherein:

- an inverted transformation of the normalization is calculated,
- said inverted transformation is applied to the template of parcellation into ROIs, therefore each voxel of the image is assigned to one of the ROI in the brain native reference frame.

During the transformation of the normalization, a deformation field applied to the image is stored in the computer and then inverted by the program. The application of the inverted deformation field to the template of parcellation into ROIs provides for the parcellation into ROIs in the brain native reference frame.

The following disclosure will be made with a method of analysing an anatomic T1 weighted MRI on which the distribution of grey matter in each ROI of the whole brain as anatomical feature of the brain is studied within the context of the detection of Alzheimer disease.

It should be noted, however, that, depending on the application of the analysis of the image, any other anatomical or functional feature could be observed and studied with the corresponding image data using the improved method of the invention.

In the particular embodiment, determination of the discriminating value may be based on intensity level of the voxels, and especially the grey intensity level, as image data.

Besides, for each ROI, the determination of the discriminating value may comprise:

- calculation of one relative parameter or several relative parameters concerning the intensity level based on intensity level measured for each voxel,
- establishment of the discriminating value from the relative parameter or from a combination of said relative parameters.

In the particular embodiment, the determination of the discriminating value may comprise, for each ROI, identification of groups of voxels according to the intensity level of said voxels.

For example, on the T1 weighted MRI parcelled as above described, histograms of the intensity level of the voxels in each ROI may be ploted. The histograms show three modes corresponding to three tissues of the brain. In order to identify the groups of voxels, a probability model applied to the voxels may be used. An example of suitable probability model applied is an algorithm for separating a mixture of Gaussians:

$$\alpha_1 * \mathrm{N}(\mu_1, \sigma_1^2) + \alpha_2 * \mathrm{N}(\mu_2, \sigma_2^2) + \alpha_3 * \mathrm{N}(\mu_3, \sigma_3^2)$$

Where

$\alpha_i$ is the relative weight of voxels belonging to the Gaussian i,

$\mu_i$ is the mean value of the Gaussian i,

$\sigma_i$ is the standard deviation of the Gaussian i,

This permits to identify three Gaussians and to assign each voxel of each ROI a probability to belong to one of the three Gaussians which correspond to three of the tissues of the brain: the grey matter, the white matter and the cerebro-spinal fluid.

Hence, the voxels of each ROI which belong to grey matter, to the white matter or to the cerebro-spinal fluid may be identified.

Furthermore, for each ROI, the algorithm for separating a mixture of Gaussian provides for the following relative parameters:

- statistical parameters such as the mean value and the standard deviation concerning the intensity level of the voxels,
- relative weight of each group of voxels with regard to the other groups of voxels.

However, it should be noted that, depending on the kind of image collected and on the anatomical or functional feature observed, other relative parameters could be considered such as volume of the ROI, circulation in each ROI of oxygen, of blood or of water.

Thus, calculation of the relative parameter and subsequent determination of the discriminating value are made for each ROI considering the intensity level of all the voxels of said ROI so that the discriminating value is representative of the ROI. Said determination can be performed for voxels of one of the groups, especially for voxels of grey matter.

In an example, two discriminating values may, for example, be established:

- the relative weight $\alpha$ of grey matter with regard to white matter and cerebro-spinal fluid and

- the value $\alpha * \dfrac{\sigma}{\mu}$ of the grey matter.

And an evaluation of a discriminating power of said relative discriminating values may then be performed.

To that end, the above disclosed method for analysing an image of the brain of a subject is performed for the brain of a plurality of subjects so that a statistical analysis of the relative discriminating values can be conducted to permit the evaluation of said discriminating power.

For example, a test of Student may be performed. For each region, the distribution of the value $X = \alpha * \dfrac{\sigma}{\mu}$ (or the value X = $\alpha$) may be obtained for first subjects, having a typical anatomical or functional feature, in the present case a typical grey matter distribution, i.e. healthy subjects, and second subjects, having a troubled anatomical or functional feature, in the present case a troubled grey matter distribution, i.e. subjects having Alzheimer disease.

The test T is defined the following way:

$$T = \frac{\overline{X}_{Ctl} - \overline{X}_{MA}}{\sqrt{(S_{Ctl}^2 + S_{MA}^2) * (\dfrac{1}{n_{Ctl}} + \dfrac{1}{n_{MA}})}} * \sqrt{n_{Ctl} + n_{MA} - 2}$$

Where

$X_{i,Ctl}$ is the value X for the first subject i,

$\overline{X}_{Ctl}$ is the mean value X for the first subjects,

$X_{i,MA}$ is the value X for the second subject i,

$\overline{X}_{MA}$ is the mean value X for the second subjects,

$$S_{Ctl}^2 = \sum_i (X_{i,Ctl} - \overline{X}_{Ctl})^2 \, ,$$

$$S_{MA}^2 = \sum_i (X_{i,MA} - \overline{X}_{MA})^2 \, ,$$

$n_{Ctl}$ is the number of first subjects,

$n_{MAl}$ is the number of second subjects.

For each ROI, a threshold for which the discriminating value is significantly different between first and second subjects can be defined.

According to the application, the method may further comprise determination of at least one significant ROI regarding the relative discriminating values of the ROIs and a classification, by means, for example, of an algorithm Support Vector Machine, of the images according to the relative discriminating values of the significant ROI.

The method is performed on the whole brain for each ROI so that each significant ROI may be taken into account without prejudice. Furthermore, since the discriminating value of each ROI is determined on the basis of the image data, in particular the intensity level, of each voxel of said ROI and the discriminating values of each ROI is relative to that of the other ROIs, it is possible to make an accurate and objective classification of the images.

The above described method may be performed in an automated manner using for example an apparatus comprising:

- collection means suitable for collection of an image of the brain of the above mentioned types, in particular T1 weighted MRI,

- a carrier storing a computer program product for analysing an image of the brain of a subject,
- a computer provided with a processor and suitable to read said carrier.

Since the discriminating value of each ROI of the whole brain is relative, collection of the image can be performed on any collection means and with different settings of the collection means.

The computer program product comprises instructions operable to cause the processor:

- to parcellate in an automated manner the image of the brain of a subject into regions of interest (ROIs) in the brain native reference frame characteristic of said brain,

- to determine in an automated manner, for each ROI, at least one discriminating value, in particular $\alpha * \dfrac{\sigma}{\mu}$ or α, based on image data, for example intensity level, measured on the image, said intensity level being representative of distribution of grey matter in the brain, each discriminating value being relative with regard to the discriminating values of the other ROIs.

As above indicated, the instructions operable to cause the processor to parcellate the image may be operable to cause the processor:

- to normalise the image, the image being sampled into voxels, each voxel being assigned to a ROI of the common template of parcellation into ROIs of the MNI single subject, in the common MNI reference frame,
- to apply a non linear transformation, and especially:

  - to calculate an inverted transformation of the normalization,

- to apply said inverted transformation to the template of parcellation into ROIs, each voxel of the image being assigned to one of the ROI in the brain native reference frame.

Besides the instructions operable to cause the processor to determine the discriminating value may be operable to cause the processor:

- to calculate one or several relative parameters concerning the image data based on the grey intensity level measured for each voxel, such as the relative weight of grey matter in each ROI, the mean value and the standard deviation of intensity level of the voxels of each ROI,
- to establish the discriminating value from the relative parameter or from a combination of said relative parameters,
- in case of need, to cause the processor, for each ROI, to identify groups of voxels, in particular those which belong to grey matter, to the white matter or to the cerebro-spinal fluid, according to intensity level of said voxels, for example by applying the algorithm for separating a mixture of Gaussians.

According to the above described embodiment, the instructions operable to cause the processor to calculate the relative parameters may be operable to cause the processor to calculate the relative parameters for voxels of grey matter.

The computer program product may further comprise instructions to determine at least one significant ROI regarding the relative discriminating values of the ROIs.

The instructions operable to cause the processor to parcellate the image and to determine the relative discriminating value for each ROI can then make the processor operate said instructions for images of the brain of a plurality of subjects so that the computer program product further comprising instructions operable to cause the processor to evaluate the discriminating power of the relative discriminating value as above explained.

The computer program product may comprise instructions to cause the processor to classify the images according to the relative discriminating values of the significant ROI.

The above described apparatus using the computer program product improves objectiveness of the selection of the significant ROIs and the accuracy of parcellation and of the discriminating value determination so as to provide for an improved representation of the features of the brain.

**Claims**

1. Method for analysing an image of the brain of a subject, comprising:

   - collection of an image in at least three dimensions of the brain of a subject,
   - parcellation of said image into regions of interest (ROIs) in a brain native reference frame characteristic of said brain,
   - determination in an automated manner, for each ROI, of at least one discriminating value based on image data measured on the image, said image data being representative of an anatomical or functional feature of the brain, each discriminating value being relative with regard to the discriminating values of the other ROIs.

2. The method according to claim 1, wherein parcellation is performed in an automated manner.

3. The method according to claim 2, wherein parcellation comprises:

   - normalization of the image, the image being sampled into voxels, each voxel being assigned to a ROI of a common template of parcellation into ROIs in a common reference frame,
   - application of a non linear transformation to the template of parcellation into ROIs.

4. The method according to claim 3, wherein the non linear transformation comprises:

   - calculation of an inverted transformation of the normalization,
   - application of said inverted transformation to the template of parcellation into ROIs, each voxel of the image being assigned to one of the ROI in the brain native reference frame.

5. The method according to claim 3 or 4, wherein determination of the discriminating value comprises, for each ROI:

   - calculation of at least one relative parameter concerning the image data based on said image data measured for each voxel,
   - establishment of the discriminating value from the relative parameter.

6. The method according to claim 5, wherein the determination of the discriminating value comprises, for each ROI, the calculation of several relative parameters concerning the image data and the establishment of the discriminating value from a combination of said relative parameters.

7. The method according to claim 5 or 6, wherein the determination of the discriminating value comprises, for each ROI, identification of groups of voxels according to image data of said voxels.

8. The method according to claim 7, wherein the identification of groups of voxels is performed using a probability model applied to the voxels.

9. The method according to claim 7 or 8, wherein calculation of the relative parameter is performed for voxels of one of the groups.

10. The method according to any of claims 7 to 9, wherein the relative parameter comprises relative weight of one group of voxels with regard to the other groups of voxels.

11. The method according to any of claims 5 to 10, wherein the relative parameter comprises statistical parameter concerning the image data of the voxels.

12. The method according to any of claims 1 to 11, wherein the image data comprise intensity level.

13. The method according to any of claims 1 to 12, further comprising determination of at least one significant ROI regarding the relative discriminating values of the ROIs.

14. The method according to claim 13, wherein collection of the image, parcellation of said image, determination of the relative discriminating value for each ROI are performed for the brain of a plurality of subjects, an evaluation of a discriminating power of the relative discriminating value being performed by a statistical analysis of the relative discriminating value.

15. The method according to claim 14, further comprising classification of the images according to the relative discriminating values of the significant ROI.

16. Computer program product for analysing an image of the brain of a subject, said computer program product being stored on a carrier readable by a computer and comprising instructions operable to cause a processor:

- to parcellate in an automated manner an image in at least three dimensions of the brain of a subject into regions of interest (ROIs) in a brain native reference frame characteristic of said brain,
- to determine in an automated manner, for each ROI, at least one discriminating value based on image data measured on the image, said image data being representative of an anatomical or functional feature of the brain, each discriminating value being relative with regard to the discriminating values of the other ROIs.

17. The computer program product according to claim 16, wherein the instructions operable to cause the processor to parcellate the image are operable to cause the processor:

- to normalise the image, the image being sampled into voxels, each voxel being assigned to a ROI of a common template of parcellation into ROIs in a common reference frame,
- to apply a non linear transformation to the template of parcellation into ROIs.

18. The computer program product according to claim 17, wherein the instructions operable to cause the processor to apply the non linear transformation are operable to cause the processor:

- to calculate an inverted transformation of the normalization,
- to apply said inverted transformation to the template of parcellation into ROIs, each voxel of the image being assigned to one of the ROI in the brain native reference frame.

19. The computer program product according to claim 17 or 18, wherein the instructions operable to cause the processor to determine the discriminating value are operable to cause the processor, for each ROI:

- to calculate at least one relative parameter concerning the image data based on said image data measured for each voxel,
- to establish the discriminating value from the relative parameter.

20. The computer program product according to claim 19, wherein the instructions operable to cause the processor to determine the discriminating value are operable to cause the processor, for each ROI, to calculate several relative parameters concerning the image data and to establish the discriminating value from a combination of said relative parameters.

21. The computer program product according to claim 19 or 20, wherein the instructions operable to cause the processor to determine the discriminating value are operable to cause the processor, for each ROI, to identify groups of voxels according to image data of said voxels.

22. The computer program product according to claim 21, wherein the instructions operable to cause the processor to identify groups of voxels are operable to cause the processor to apply a probability model to the voxels.

23. The computer program product according to claim 21 or 22, wherein the instructions operable to cause the processor to calculate the relative parameter are operable to cause the processor to calculate the relative parameter for voxels of one of the groups.

24. The computer program product according to any of claims 16 to 23, further comprising instructions operable to cause the processor to determine at least one significant ROI regarding the relative discriminating values of the ROIs.

25. The computer program product according to claim 24, wherein the instructions operable to cause the processor to parcellate the image and to determine the relative discriminating value for each ROI make the processor operate said instructions for images of the brain of a plurality of subjects, the computer program product further comprising instructions operable to cause the processor to evaluate a discriminating power of the relative discriminating value by a statistical analysis of the relative discriminating value.

26. The computer program product according to claim 25, further comprising instructions operable to cause the processor to classify the images according to the relative discriminating values of the significant ROI.

27. Apparatus for implementing the method according to any of claims 1 to 15, comprising:

- collection means suitable for collection of an image in at least three dimensions of the brain of a subject,
- a carrier storing a computer program product according to any of claims 16 to 26,
- a computer provided with a processor and suitable to read said carrier.

## EUROPEAN SEARCH REPORT

**European Patent Office**

| | | Application Number |
|---|---|---|
| | | EP 07 29 0604 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUBOTA ET AL: "A region-of-interest (ROI) template for three-dimensional stereotactic surface projection (3D-SSP) images: Initial application to analysis of Alzheimer disease and mild cognitive impairment" INTERNATIONAL CONGRESS SERIES, EXCERPTA MEDICA, AMSTERDAM, NL, vol. 1290, June 2006 (2006-06), pages 128-134, XP005499264 ISSN: 0531-5131 | 1-4, 12-18, 24-27 | INV. G06T7/00 |
| Y | * abstract *<br><br>* sections 2. and 3. *<br>* figures 1,4 * | 5-11, 19-23 | |
| X | BENALI ET AL: "BIRD: a brain imaging relational database" NEUROIMAGE, ACADEMIC PRESS, ORLANDO, FL, US, vol. 3, no. 1, June 1996 (1996-06), page S112, XP005346343 ISSN: 1053-8119 | 1,2, 12-16, 24-27 | |
| Y | * the whole document * | 3-11, 17-23 | TECHNICAL FIELDS SEARCHED (IPC)<br><br>G06T |
| X | US 2006/233430 A1 (KIMURA TOKUNORI [JP]) 19 October 2006 (2006-10-19) | 1,12,16, 27 | |
| Y | * abstract *<br><br>* figure 2 * | 3-11, 17-23 | |
| | -/-- | | |

The present search report has been drawn up for all claims

| Place of search | Date of completion of the search | Examiner |
|---|---|---|
| Munich | 30 July 2007 | Engels, Angela |

EPO FORM 1503 03.82 (P04C01)

**European Patent Office**

**EUROPEAN SEARCH REPORT**

Application Number

EP 07 29 0604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MEGA M S ET AL: "Automated brain tissue assessment in the elderly and demented population: Construction and validation of a sub-volume probabilistic brain atlas" NEUROIMAGE, ACADEMIC PRESS, ORLANDO, FL, US, vol. 26, no. 4, 15 July 2005 (2005-07-15), pages 1009-1018, XP004929552 ISSN: 1053-8119 * abstract * * ection "Image processing" * ----- | 5-11, 19-23 | |
| A | US 2005/215889 A1 (PATTERSON JAMES C II [US]) 29 September 2005 (2005-09-29) * abstract * ----- | 14,15, 25,26 | |
| A | FARROW ET AL: "Fronto-temporal-lobe atrophy in early-stage Alzheimer's disease identified using an improved detection methodology" PSYCHIATRY RESEARCH: NEUROIMAGING, ELSEVIER, vol. 155, no. 1, 14 April 2007 (2007-04-14), pages 11-19, XP022039536 ISSN: 0925-4927 * abstract * * section 2. * ----- | 1-27 | TECHNICAL FIELDS SEARCHED (IPC) |

The present search report has been drawn up for all claims

| Place of search | Date of completion of the search | Examiner |
|---|---|---|
| Munich | 30 July 2007 | Engels, Angela |

EPO FORM 1503 03.82 (P04C01)

## ANNEX TO THE EUROPEAN SEARCH REPORT
## ON EUROPEAN PATENT APPLICATION NO.

EP 07 29 0604

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2007

| Patent document cited in search report | Publication date | Patent family member(s) | Publication date |
|---|---|---|---|
| US 2006233430 A1 | 19-10-2006 | NONE | |
| US 2005215889 A1 | 29-09-2005 | WO 2005094686 A2 | 13-10-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060104494 A

**Non-patent literature cited in the description**

- **TZOURIO-MAZOYER.** *Automated Anatomical Labeling of Activations in SPM Using a Macroscopic Anatomical Parcellation of the MNI MRI Single-Subject Brain*

- **N. TZOURIO-MAZOYER et al.** *NeuroImage,* January 2002, vol. 15, 273-289